# EUROPEAN PATENT SPECIFICATION

(11) **EP 3 035 524 B1**
(45) Date of publication and mention of the grant of the patent: **16.09.2020**
(21) Application number: 15198681.7
(22) Date of filing: 09.12.2015
(51) Int. Cl.: H02S 40/34

(54) **PHOTOVOLTAIC CONNECTION BOX AND PHOTOVOLTAIC ASSEMBLY**
FOTOVOLTAISCHE ANSCHLUSSDOSE UND FOTOVOLTAIKANLAGE
BOÎTE DE CONNEXION PHOTOVOLTAÏQUE ET ENSEMBLE PHOTOVOLTAÏQUE

(30) Priority: 17.12.2014 CN 201410783570
(43) Date of publication of application: 22.06.2016
(73) Proprietor: Tyco Electronics (Shanghai) Co., Ltd., Pilot Free Trade Zone Shanghai (CN); Tyco Electronics Holdings (Bermuda) No. 7 Limited, HM 11 Hamilton (BM)
(72) Inventor: ZHONG, Yuan, Shanghai (CN); TAO, Ting, Shanghai (CN); KE, Shiyin, Taipei, 11457 (TW)
(74) Representative: Grünecker Patent- und Rechtsanwälte PartG mbB

(56) References cited:
- EP-A2- 2 146 383
- EP-A2- 2 330 634
- EP-A2- 2 400 562

## Description

### Field of the Invention

Embodiments of the present invention relate to a photovoltaic connection box installed on solar panels and a photovoltaic assembly comprising such a photovoltaic connection box.

### Description of the Related Art

A solar panel (or so called "a solar cell panel") is a device which collects solar energy and converts the solar energy into electric energy. As the electric current produced by each of the solar panel is weak, it is necessary to use a photovoltaic connection box to electrically interconnect a plurality of solar panels so as to converge the electric current produced by a plurality of solar panels for outputting.

In the prior art, normally the photovoltaic connection box is directly mounted on a corresponding solar panel and is electrically connected with the busbar of the solar panel. A conductive terminal and a diode electrically connected to the conductive terminal are installed in the photovoltaic connection box. In the prior art, the diode is fixed on the horizontal surface of the conductive terminal which is parallel with the solar panel. Such an arrangement results in that the diode is very close to the solar panel, that is, the distance between the diode and the solar panel is very small, as a result, a lot of heat will be created when the diode is operating, and the heat tends to be transferred to the panels, reducing the power generation effeciency of the solar panels. A photovoltaic connection box is known from EP 2 400 562 A2. The box is mounted on a solar panel and is electrically connected to a bus bar of the solar panel.

Furthermore, in the prior art, as the diode is secured on the horizontal surface of the conductive terminal which is parallel with the solar panel, the conductive terminal needs a relative large horizontal surface and it will result in a relative large dimensions in term of length and wideness of the photovoltaic connection box, which is detrimental for miniaturization of the photovoltaic connection box.

### SUMMARY OF THE INVENTION

The purpose of the present invention is intended to solve at least one aspect of the above issues and faults in the prior art.

One object of the present invention is to provide a photovoltaic connection box and a photovoltaic assembly having the same, which may prevent the heat created by the diode from being transferred to the solar panel, and improve the power generation efficiency of the solar panel.

Another object of the present invention is to provide a photovoltaic connection box which has a smaller length and wideness, achieving the miniaturization of the photovoltaic connection box.

According to the present invention as defined in claim 1, there is provided a photovoltaic connection box, which is mounted on the surface of a solar panel, comprising: a box, a conductive terminal received in the box and having a fist lateral wall which is perpendicular to the surface of the solar panel; and a diode connected to the first lateral wall of the conductive terminal. According to an exemplary embodiment of the present invention, the conductive terminal further comprises a bottom wall; and a second lateral wall opposite to the first lateral wall, wherein the first and second lateral walls are perpendicular to the bottom wall, and extend upward vertically from either side of the bottom wall, respectively.

The conductive terminal further comprises a lateral wing which is perpendicular to the second lateral wall and extends outwards horizontally from the second lateral wall, wherein a busbar mounted on the solar panel is introduced into the photovoltaic connection box from the bottom wall, and is electrically connected to the lateral wing of the conductive terminal.

According to another exemplary embodiment of the present invention, a recess having a flat bottom surface is formed on the lateral wing, , an end of the busbar being positioned in the recess and being welded onto the flat bottom surface of the recess.

According to another exemplary embodiment of the present invention, the photovoltaic connection box further comprises a first wire which has an end introduced into the box from one end thereof and is electrically connected to one conductive terminal; and a second wire which has an end introduced into the box from the other end thereof and is electrically connected to another conductive terminal.

According to another exemplary embodiment of the present invention, the end of the first wire is welded or press-fitted to the said one conductive terminal and the end of the second wire is welded or press-fitted to the said another conductive terminal.

According to another exemplary embodiment of the present invention, the photovoltaic connection box has at least two conductive terminals and one diode is electrically connected between two adjacent conductive terminals.

According to another exemplary embodiment of the present invention, the photovoltaic connection box has four conductive terminals and three diodes, and the four conductive terminals are arranged in a row along the length of the box.

According to another exemplary embodiment of the present invention, the diode is a chip-type diode which is welded on the outer side of the first lateral wall of the conductive terminal in a manner of surface mounting.

According to an aspect of the present invention, there is provided a photovoltaic assembly comprising a solar panel, and a photovoltaic assembly according to any one of the mentioned exemplary embodiments which is installed on the solar panel and is electrically connected to a busbar of the solar panel.

According to an exemplary embodiment of the present invention, the solar panel is a monocrystalline silicon solar panel, a polycrystalline silicon solar panels, a thin-film solar panels or a double-wave photovoltaic panel.

In the photovoltaic connection box according to any one of the mentioned exemplary embodiments, as the diode is installed on a vertical lateral wall of the conductive terminal which is perpendicular to the solar panel, the distance between the diode and the solar panel is increased, which may effectively prevent the heat created by the diode from being transferred to the solar panel, and improve the power generation efficiency of the solar panel.

### BRIEF DESCRIPTION OF THE DRAWINGS

Other characteristics and advantages of the present invention will be made clear by the following detailed description, the comprehension of which will be facilitated by reference to the attached drawings.
Fig. 1 is a perspective view showing a photovoltaic connection box and a solar panel according to an exemplary embodiment of the present invention;
Fig. 2 is an enlarged view of the photovoltaic connection box shown in fig. 1;
Fig. 3 is an enlarged view of the conductive terminal in the photovoltaic connection box shown in fig. 2; and
Fig.4 is a cross-section view of the solar panel and the photovoltaic connection box mounted on the solar panel which are shown in fig. 1.

### DETAILED DESCRIPTION OF PREFERRED EMBODIMENTS OF THE IVENTION

Exemplary embodiments of the present invention will be described hereinafter in detail with reference to the attached drawings, wherein the like reference numerals refer to the like elements. The present invention may, however, be embodied in many different forms and should not be construed as being limited to the embodiment set forth herein; rather, these embodiments are provided so that the present invention will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a photovoltaic connection box mounted on a surface of a solar panel, comprising: a box, a conductive terminal received in the box; and a diode electrically connected to the conductive terminal. The conductive terminal has a fist lateral wall which is perpendicular to the surface of the solar panel, and the diode is mounted on the first lateral wall of the conductive terminal.

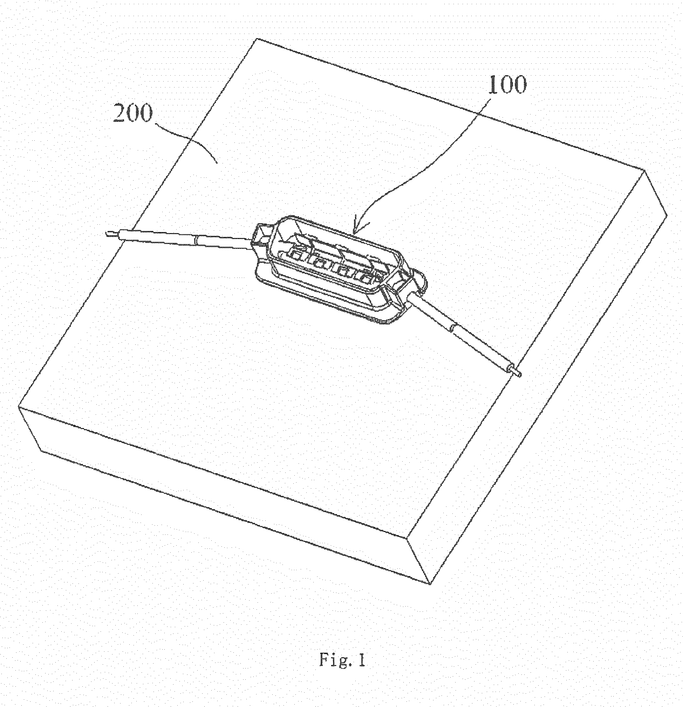

Fig. 1 is a perspective view showing a photovoltaic connection box 100 and a solar panel 200 according to an exemplary embodiment of the present invention.

In an exemplary embodiment of the present invention, as shown in Fig. 1, a photovoltaic connection box 100 is illustrated. The photovoltaic connection box 100 is mounted on the surface of the solar panel 200 and is electrically connected with the busbar (not shown) of the solar panel 200.

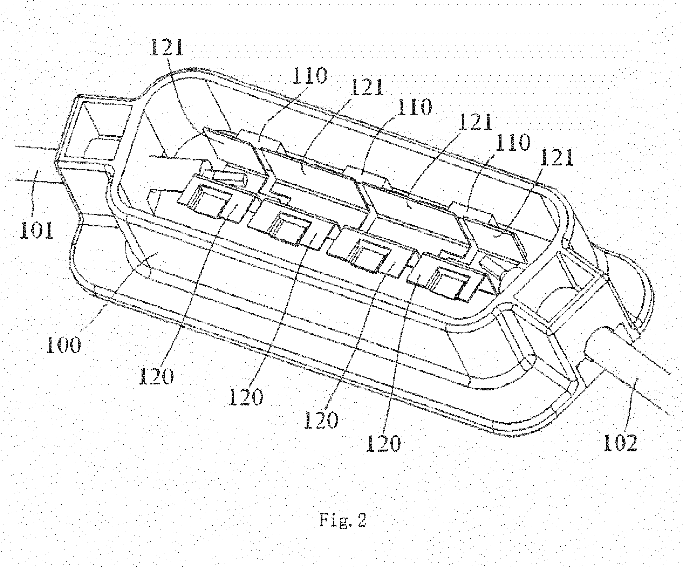

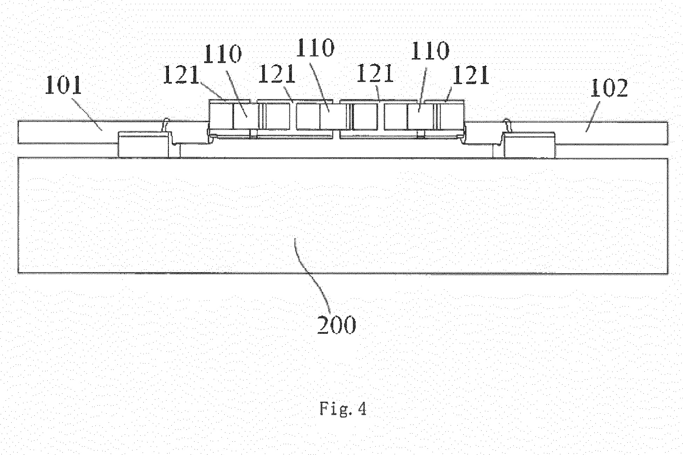

Fig. 2 is an enlarged view of the photovoltaic connection box 200 shown in Fig. 1. Fig.4 is a cross-section view of the solar panel 200 and the photovoltaic connection box 100 mounted on the solar panel 200 which are shown in Fig. 1.

In an exemplary embodiment of the present invention, as shown in Fig. 2, the photovoltaic connection box 100 mainly comprises a box, a plurality of conductive terminals 120 received in the box; and a diode 110 installed on the conductive terminals 120.

Please refer to Figs. 2 and 4, in the illustrated embodiment, the conductive terminal 120 has a fist lateral wall 121 which is perpendicular to the surface of the solar panel 200, and the diode 110 is mounted on the first lateral wall 121 of the conductive terminal 120. In this way, the distance between the diode 110 and the solar panel 200 is increased, which may effectively prevent the heat created during the diode 110 is operating from being transferred to the solar panel 200, and improve the power generation efficiency of the solar panel. Further, as the diode 110 is installed on a vertical lateral wall 121 of the conductive terminal 120 which is perpendicular to the solar panel 200, the conductive terminal does not need a relative large horizontal surface, which substantially reduces the sizes of length and wideness of the photovoltaic connection box, achieving the miniaturization of the photovoltaic connection box 100. Because the photovoltaic connection box 100 has a small sizes of wideness and length, it is adapted to various solar panels types, such as a monocrystalline silicon solar panel, a polycrystalline silicon solar panels, a thin-film solar panels and a double-wave photovoltaic panel.

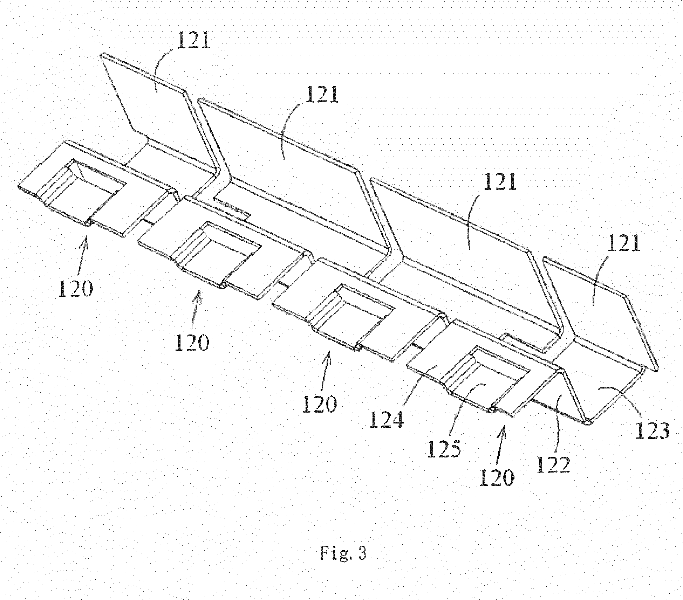

Fig. 3 is an enlarged view of the conductive terminal 120 in the photovoltaic connection box 100 shown in fig. 2.

As shown in Fig. 3, in an exemplary embodiment of the present invention, the conductive terminal 120 further comprises a bottom wall 123, and a second lateral wall 122 opposite to the first lateral wall 121. The first and second lateral walls 121, 122 are perpendicular to the bottom wall 123, and extend upward vertically from either side of the bottom wall 123, respectively.

Please further refer to Figs. 2 and 3, in an exemplary embodiment of the present invention, the conductive terminal 120 further comprises a lateral wing 124 which is perpendicular to the second lateral wall 122 and extends outwards horizontally from the second lateral wall 122. As such, a busbar mounted on the solar panel 200 may be introduced into the photovoltaic connection box 100 from the bottom wall, and is electrically connected to the lateral wing 124 of the conductive terminal 120.

As shown in Figs. 2 and 3, in an exemplary embodiment of the present invention, a recess 125 is formed on the lateral wing 124, and the recess 125 has a flat bottom surface. An end of the busbar may be positioned in the recess 125 and being welded onto the flat bottom surface of the recess 125 by soldering or resistance welding, such that the busbar can be electrically connected to the conductive terminals 120 securely.

As shown in Fig. 2, in an exemplary embodiment of the present invention, the photovoltaic connection box further comprises a first wire 101 and a second wire 102. The first wire 101 has an end introduced into the box from one end thereof and is electrically connected to the conductive terminal 120. The second wire 102 has an end introduced into the box from the other end thereof and is electrically connected to another conductive terminal 120. In an exemplary embodiment of the present invention, an end of the first wire 101 may be welded or press-fitted to one conductive terminal 120 and an end of the second wire 102 is welded or press-fitted to another conductive terminal 120.

As shown in Fig. 2, in an exemplary embodiment of the present invention, the photovoltaic connection box has four conductive terminals 120 and three diodes 110, and the four conductive terminals 120 are arranged in a row along the length of the box. One diode 110 is electrically connected between two adjacent conductive terminals 120. It should to be noted that the present invention is not limited to illustrated embodiments, the photovoltaic connection box may also have two, three, five or more conductive terminals and one, two, four or more diodes.

In the illustrated embodiments, as shown in Figs. 2, 3 and 4, the diode 110 is a chip-type diode which is welded on the outer side of the first lateral wall 121 of the conductive terminal 120 in a manner of surface mounting. However, the present invention is not limited to illustrated embodiments, the diode 100 may be welded on the conductive terminal in a manner of dual inline package (DIP)

In another exemplary embodiment of the present invention, a photovoltaic assembly is disclosed, as shown in Fig. 1, it comprises a solar panel 200 and the photovoltaic connection box 100 mentioned above. The photovoltaic connection box 100 is installed on the solar panel 200 and is electrically connected to the busbar of the solar panel 200.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

As used herein, an element recited in the singular and proceeded with the word "a" or "an" should be understood as not excluding plural of the said elements or steps, unless such exclusion is explicitly stated. Furthermore, references to the elements of the present invention are not intended to be interpreted as limiting the protection scope of the present invention.

## Claims

1. A photovoltaic connection box (100) which is mounted on the surface of a solar panel (200) comprises:
a box,
a conductive terminal (120) received in the box and having a first lateral wall (121) which is perpendicular to the surface of the solar panel (200); and
a diode (110) connected to the first lateral wall (121) of the conductive terminal (120),
wherein the conductive terminal (120) further comprises
a bottom wall (123); and
a second lateral wall (122) opposite to the first lateral wall (121), wherein
the first and second lateral walls (121, 122) are perpendicular to the bottom wall (123),
and extend upward vertically from either side of the bottom wall (123), respectively, and
wherein the conductive terminal (120) further comprises:
a lateral wing (124) which is perpendicular to the second lateral wall (122) and extends outwards horizontally from the second lateral wall (122), and
wherein a busbar mounted on the solar panel (200) is introduced into the photovoltaic connection box (100) from the bottom wall (123), and is electrically connected to the lateral wing (124) of the conductive terminal (120).

2. The photovoltaic connection box (100) according to claim 1, wherein a recess (125) having a flat bottom surface is formed on the lateral wing (124), an end of the busbar being positioned in the recess (125) and being welded onto the flat bottom surface of the recess (125).

3. The photovoltaic connection box (100) according to claim 1 or 2, further comprises:
a first wire (101) which has an end introduced into the box (100) from one end thereof and
is electrically connected to one conductive terminal (120); and
a second wire (102) which has an end introduced into the box (100) from the other end thereof and is electrically connected to another conductive terminal (120).

4. The photovoltaic connection box (100) according to claim 3, wherein the end of the first wire (101) is welded or press-fitted to the said one conductive terminal (120) and the end of the second wire (102) is welded or press-fitted to the said another conductive terminal (120).

5. The photovoltaic connection box (100) according to one of claims 1 to 4, wherein the photovoltaic connection box (100) has at least two conductive terminals (120) and one diode (110) is electrically connected between two adjacent conductive terminals (120).

6. The photovoltaic connection box (100) according to claim 5, wherein the photovoltaic connection box (100) has four conductive terminals (120) and three diodes (110), and the four conductive terminals (120) are arranged in a row along the length of the box (100).

7. The photovoltaic connection box (100) according to one of claims 1 to 6, wherein the diode (110) is a chip-type diode which is welded on the outer side of the first lateral wall (121) of the conductive terminal (120) in a manner of surface mounting.

8. A photovoltaic assembly, comprising
a solar panel (200), and
a photovoltaic connection box (100) according to one of claims 1 to 7, which is mounted on the solar panel (200) and electrically connected to a busbar of the solar panel (200).

9. A photovoltaic assembly according to claim 8, wherein the solar panel (200) is a monocrystalline silicon solar panel, a polycrystalline silicon solar panels, a thin-film solar panels or a double-wave photovoltaic panel.

## Patentansprüche

1. Photovoltaik-Anschlusskasten (100), der an der Oberfläche eines Solarpanels (200) angebracht ist und umfasst:
einen Kasten,
einen leitenden Anschluss (120), der in dem Kasten aufgenommen ist und eine erste Seitenwand (121) hat, die senkrecht zu der Oberfläche des Solarpanels (200) ist; sowie eine Diode (110), die mit der ersten Seitenwand (121) des leitenden Anschlusses (120) verbunden ist, wobei der leitende Anschluss (120) des Weiteren umfasst:
eine Bodenwand (123); sowie
eine zweite Seitenwand (122) gegenüber der ersten Seitenwand (121), wobei die erste und die zweite Seitenwand (121, 122) senkrecht zu der Bodenwand (123) sind und sich jeweils von beiden Seiten der Bodenwand (123) vertikal nach oben erstrecken, und wobei der leitende Anschluss (120) des Weiteren umfasst:
einen Seitenflügel (124), der senkrecht zu der zweiten Seitenwand (122) ist und sich von der zweiten Seitenwand (122) horizontal nach außen erstreckt, und
wobei eine an dem Solarpanel (200) angebrachte Sammelschiene von der Bodenwand (123) aus in den Photovoltaik-Anschlusskasten (100) eingeführt und elektrisch mit dem Seitenflügel (124) des leitenden Anschlusses (120) verbunden ist.

2. Photovoltaik-Anschlusskasten (100) nach Anspruch 1, wobei eine Aussparung (125) mit einer ebenen Bodenfläche an dem Seitenflügel (124) ausgebildet ist und ein Ende der Sammelschiene in der Aussparung (125) positioniert und an der ebenen Bodenfläche der Aussparung (125) angeschweißt ist.

3. Photovoltaik-Anschlusskasten (100) nach Anspruch 1 oder 2, der des Weiteren umfasst:
einen ersten Draht (101), der ein Ende hat, das in den Kasten (100) von einem Ende desselben her eingeführt und elektrisch mit einem leitenden Anschluss (120) verbunden ist; sowie
einen zweiten Draht (102), der ein Ende hat, das in den Kasten (100) von dem anderen Ende desselben her eingeführt und elektrisch mit einem anderen leitenden Anschluss (120) verbunden ist.

4. Photovoltaik-Anschlusskasten (100) nach Anspruch 3, wobei das Ende des ersten Drahtes (101) an den einen leitenden Anschluss (120) angeschweißt oder pressgepasst ist und das Ende des zweiten Drahtes (102) an den anderen leitenden Anschluss (120) angeschweißt oder pressgepasst ist.

5. Photovoltaik-Anschlusskasten (100) nach einem der Ansprüche 1 bis 4, wobei der Photovoltaik-Anschlusskasten (100) wenigstens zwei leitende Anschlüsse (120) aufweist und eine Diode (110) elektrisch zwischen zwei benachbarte leitende Anschlüsse (120) geschaltet ist.

6. Photovoltaik-Anschlusskasten (100) nach Anspruch 5, wobei der Photovoltaik-Anschlusskasten (100) vier leitende Anschlüsse (120) und drei Dioden (110) aufweist und die vier leitenden Anschlüsse (120) in einer Reihe über die Länge des Kastens (100) angeordnet sind.

7. Photovoltaik-Anschlusskasten (100) nach einem der Ansprüche 1 bis 6, wobei die Diode (110) eine Chip-Diode ist, die in einem Oberflächenmontage-Verfahren an der Außenseite der ersten Seitenwand (121) des leitenden Anschlusses (120) angeschweißt wird.

8. Photovoltaik-Anordnung, umfassend:
ein Solarpanel (200), sowie
einen Photovoltaik-Anschlusskasten (100) nach einem der Ansprüche 1 bis 7, der an dem Solarpanel (200) angebracht und elektrisch mit einer Sammelschiene des Solarpanels (200) verbunden ist.

9. Photovoltaik-Anordnung nach Anspruch 8, wobei das Solarpanel (200) ein Solarpanel aus monokristallinem Silizium, ein Solarpanel aus polykristallinem Silizium, ein Dünnschicht-Solarpanel oder ein Doppelwellen-Photovoltaik-Modul (double-wave photovoltaic panel) ist.

## Revendications

1. Boîte de connexion photovoltaïque (100) montée sur la surface d'un panneau solaire (200), comprenant :
une boîte,
une borne conductrice (120) reçue dans la boîte et comportant une première paroi latérale (121) perpendiculaire à la surface du panneau solaire (200) ; et
une diode (110) connectée à la première paroi latérale (121) de la borne conductrice (120), dans laquelle la borne conductrice (120) comprend en outre
une paroi de fond (123) ; et
une deuxième paroi latérale (122) opposée à la première paroi latérale (121), dans laquelle
les première et deuxième parois latérales (121, 122) sont perpendiculaires à la paroi de fond (123), et s'étendent verticalement vers le haut depuis respectivement l'un ou l'autre côté de la paroi de fond (123), et dans laquelle la borne conductrice (120) comprend en outre :
une aile latérale (124) qui est perpendiculaire à la deuxième paroi latérale (122) et s'étend horizontalement vers l'extérieur depuis la deuxième paroi latérale (122), et
dans laquelle un jeu de barres monté sur le panneau solaire (200) est introduit dans la boîte de connexion photovoltaïque (100) depuis la paroi de fond (123), et est connecté électriquement à l'aile latérale (124) de la borne de conduction (120).

2. Boîte de connexion photovoltaïque (100) selon la revendication 1, dans laquelle un renfoncement (125) comportant une surface de fond plane est formé sur l'aile latérale (124), une extrémité du jeu de barres étant positionnée dans le renfoncement (125) et soudée sur la surface de fond plane du renfoncement (125).

3. Boîte de connexion photovoltaïque (100) selon la revendication 1 ou 2, comprenant en outre :
un premier fil (101) dont une extrémité est introduite dans la boîte (100) depuis une de ses extrémités et connectée électriquement à une borne conductrice (120) ; et
un deuxième fil (102) dont une extrémité est introduite dans la boîte (100) depuis sa dite autre extrémité et connectée électriquement à une autre borne conductrice (120).

4. Boîte de connexion photovoltaïque (100) selon la revendication 3, dans laquelle l'extrémité du premier fil (101) est soudée ou sertie sur ladite borne conductrice (120) et l'extrémité du deuxième fil (102) est soudée ou sertie sur ladite autre borne conductrice (120).

5. Boîte de connexion photovoltaïque (100) selon l'une des revendications 1 à 4, dans laquelle la boîte de connexion photovoltaïque (100) comporte au moins deux bornes conductrices (120) et une diode (110) est connectée électriquement entre deux bornes conductrices adjacentes (120) .

6. Boîte de connexion photovoltaïque (100) selon la revendication 5, dans laquelle la boîte de connexion photovoltaïque (100) comporte quatre bornes conductrices (120) et trois diodes (110), et les quatre bornes conductrices (120) sont agencées en ligne sur la longueur de la boîte (100).

7. Boîte de connexion photovoltaïque (100) selon l'une des revendications 1 à 6, dans laquelle la diode (110) est une diode de type puce qui est soudée sur le côté externe de la première paroi latérale (121) de la borne conductrice (120) par montage en surface.

8. Ensemble photovoltaïque, comprenant
un panneau solaire (200), et
une boîte de connexion photovoltaïque (100) selon l'une des revendications 1 à 7, montée sur le panneau solaire (200) et connectée électriquement à un jeu de barres du panneau solaire (200).

9. Ensemble photovoltaïque selon la revendication 8, dans lequel le panneau solaire (200) est un panneau solaire à silicium monocristallin, un panneau solaire à silicium polycristallin, un panneau solaire à couche mine, ou un panneau photovoltaïque à double onde.
